# EUROPEAN PATENT APPLICATION

(11) **EP 4 756 780 A1**
(43) Date of publication of application: **10.06.2026**
(21) Application number: 25218024.5
(22) Date of filing: 24.11.2025
(51) Int. Cl.: G08G 5/21, G08G 5/23, G08G 5/26, G08G 5/54, G08G 5/55

(54) **APPROACH MONITOR SYSTEMS FOR AN AIRCRAFT**

(30) Priority: 06.12.2024 US 202418971156
(71) Applicant: The Boeing Company, Arlington, VA 22202 (US)
(72) Inventor: YOO, Jeff Dong S., ARLINGTON, 22202 (US); RUPNIK, Brian kenyon, ARLINGTON, 22202 (US); WHEELER, William Jeffrey, ARLINGTON, 22202 (US); CHAN, Albert, ARLINGTON, 22202 (US); NGUGI, Upekesha Addagatla, ARLINGTON, 22202 (US)
(74) Representative: Plasseraud IP

(57) **Abstract**

A method includes, during an initial approach for an approach to landing phase, determining, based on a target path and aircraft data, a state for each monitored condition of a first set of monitored conditions and a region of the monitored condition that includes the state. The method includes, during a final approach for the approach to landing phase, determining, based on the target path and the aircraft data, a state for each monitored condition of a second set of monitored conditions and a region of the monitored condition that includes the state. The method includes accessing notification content for a region of a particular monitored condition, where the state for the particular monitored condition is outside of a target region for the particular monitored condition. The method also includes sending notification signals based on the notification content from a computing system to one or more output systems.

## Description

### FIELD OF THE DISCLOSURE

The present disclosure is generally related to a monitoring system of an aircraft, and more particularly to an approach monitor system for an approach to landing phase of a flight of the aircraft.

### BACKGROUND

An aircraft can include a flight management system to provide information to an operator of the aircraft (e.g., a pilot), to perform tasks, or both, during flight phases of a flight. The flight phases include flight planning, pre-flight, engine start, taxi-out, take-off or reject take-off, initial climb, en route climb, cruise, descent, approach to landing or go-around, landing, taxi-in, arrival and engine shut down, and post-flight. Some flight phases are further sub-divided. For example, the approach to landing phase is further divided into initial approach and final approach, and the final approach includes a number of additional divisions based on altitude of the aircraft.

The approach to landing phase of the aircraft should be stable. A stable approach is an approach where particular flight parameters are controlled to within a specified range of values before the aircraft reaches a predefined altitude above a runway threshold where the aircraft is to land (e.g., 1000 feet, 500 feet, or other altitude) and the aircraft maintains the particular flight parameters within the specified range of values until the aircraft lands. The particular flight parameters include attitude, flight path trajectory, airspeed, rate of descent, engine thrust, and aircraft configuration. An unstable approach is an approach that is not a stable approach. Above the predefined altitude, an operator of the aircraft (e.g., a pilot) can use controls to change one or more flight characteristics to establish, or reestablish, a stable approach. If an approach is not stable by the predefined altitude, or if the approach becomes unstable below the predefined altitude, the operator of the aircraft should initiate a go-around, instead of landing, when the approach cannot quickly and easily be adjusted to a stable approach. The operator can initiate a go-around at any time above or below the predefined altitude until the aircraft lands and the speed of the aircraft is reduced below a speed sufficient to support flight of the aircraft (e.g., until thrust reversers are applied to reduce the speed of the aircraft).

### SUMMARY

According to one implementation of the present disclosure, a method as per the appended claims is disclosed.

According to another implementation of the present disclosure, an aircraft includes a plurality of sensors and one or more computing means for implementing the method, as described in the appended claims.

According to another implementation of the present disclosure, a non-transitory computer-readable medium includes instructions that are executable by one or more processors for implementing the method, as described in the appended claims.

The features, functions, and advantages that have been described can be achieved independently in various implementations or may be combined in yet other implementations, further details of which are disclosed with reference to the following description and drawings. The drawings are conceptual and not drawn to scale.

### BRIEF DESCRIPTION OF THE DRAWINGS

FIG. 1 is a block diagram of an aircraft that includes an approach monitor system.
FIG. 2 is a diagram of a target path for an approach to landing phase.
FIG. 3 is a diagram showing regions for a monitored condition of airspeed that are a function of altitude and airspeed.
FIG. 4 is a flowchart of a method of use of the approach monitor system of FIG. 1.
FIG. 5 is a flowchart illustrating an example of a life cycle of an aircraft that includes approach monitor system of FIG. 1.
FIG. 6 is a block diagram of an illustrative aircraft that includes the approach monitor system of FIG. 1.
FIG. 7 is a diagram of a representation of a computing system that includes the approach monitor system of FIG. 1.

### DETAILED DESCRIPTION

An aircraft (e.g., a commercial airplane) includes a flight management system that provides information to an operator of the aircraft, that performs tasks, or both, during flight phases of a flight of the aircraft. The operator of the aircraft can be aboard the aircraft or can remotely control the aircraft. In an implementation, the flight management system includes an approach monitor system, flight phase mode logic, or both. The approach monitor system provides information to the operator of the aircraft, performs tasks, or both, during an approach to landing phase of the aircraft. The flight phase mode logic, which may be a component of the approach monitor system, provides information to the approach monitor system that identifies a phase and/or phase division of flight of the aircraft based on sensor input, operator input, or both.

The approach to landing phase of the aircraft includes the initial approach and the final approach. During initial approach, the aircraft is capturing and tracking a centerline of a runway and changing altitude to a final approach fix altitude. During final approach, the aircraft descends from the final approach fix altitude with an intent to land on the runway. The final approach also includes several divisions. The several divisions include final approach above a predefined altitude relative to a landing threshold (e.g., above 1000 feet, 500 feet, or some other predefined altitude relative to the landing threshold), final approach below the predefined altitude and above a critical altitude relative to the landing threshold (e.g., 100 feet, 75 feet, 50 feet, or some other altitude relative to the landing threshold), final approach below the critical altitude, and a landing flare. The predefined altitude can be based on visibility conditions during the approach. The critical altitude is an altitude below which, when the approach is an unstable approach, a go-around may be automatically initiated for safety of people on the aircraft, for safety of cargo on the aircraft, for safety of the aircraft, or combinations thereof. In other implementations, the approach to landing phase can include fewer phases and/or divisions, more phases and/or divisions, different phases and/or divisions, or combinations thereof.

The approach monitor system determines, based on the information from the flight phase mode logic, whether the approach monitor system should be in a standby mode (e.g., when the aircraft is not in the approach to landing phase), or when the approach monitor system is active (e.g., during the approach to landing phase). When the approach monitor system is active, the approach monitor system additionally determines what condition monitors are active based on the information from the flight phase mode logic. For example, if the information from the flight phase mode logic indicates that the aircraft is in the approach to landing phase, the airspeed monitor is active to utilize input data to determine if the airspeed is inside or outside of a target region. As another example, if the information from the flight phase mode logic indicates that the aircraft is in initial approach, the path profile monitor is inactive until final approach is initiated.

The approach monitor system provides notification signals (e.g., one or more cautions, one or more warnings, or one or more alerts; suggested corrections; or both) to the operator when one or more monitored conditions associated with the approach to landing phase are out of target regions during the approach to landing. During the approach to landing, other systems of the flight management system work in conjunction with the approach monitor system to provide information about monitored conditions that are not monitored by the approach monitor system. For example, if an engine loses power during the approach to landing, an alert about the loss of power is provided to the operator from an engine warning system of the aircraft, along with notification signals provided by the approach monitor system about states of monitored conditions, if any, associated with the approach to landing phase that are not in corresponding target regions.

The monitored conditions monitored by the approach monitor system include an airspeed profile, a path profile, an attitude profile, energy of the aircraft, configuration of the aircraft (e.g., throttle position, landing gear position, positions of the slats and flaps, etc.), runway availability, plan reasonableness, other profiles, other conditions, or combinations thereof. The regions for each monitored condition include the target region and a number of regions outside of the target region. The number of regions outside of the target region for a particular approach phase corresponds to a number of entries in an approach database containing information for generating notification signals for the monitored condition and the particular approach phase or division.

One or more first thresholds define the target region. One or more second thresholds define one or more end regions. A first threshold for a monitored condition and a second threshold for the monitored condition can be the same value. When a second threshold is different than a nearest first threshold, an intermediate region is defined between the first threshold and the second threshold. Also, when a third threshold is between a second threshold and a first threshold, two intermediate regions are between the end region and the target region. Additional third thresholds between the second threshold and the first threshold result in additional intermediate regions.

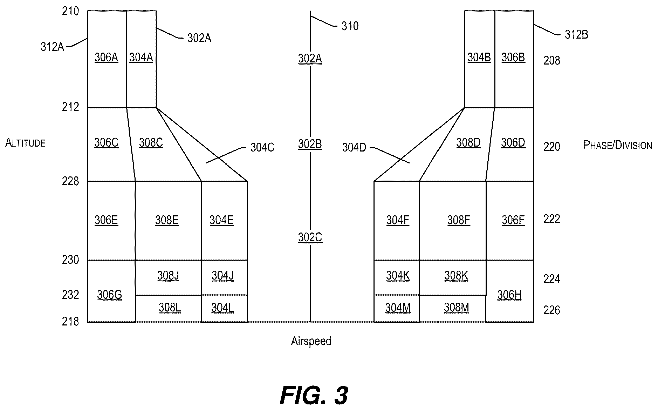

Some thresholds are dynamic thresholds that allow widths of associated regions to change as a function of altitude. For example, FIG. 3 depicts regions on each side of a target region 302 for airspeed during the approach to landing. Thresholds that define regions from a final approach fix altitude 212 associated with the start of final approach to the predefined altitude 228 are dynamic thresholds that allow the widths of the regions 304C, 304D, 306C, 306D, 308C, 308D to vary with altitude.

For some monitored conditions, there is only a single region outside of the target region. For example, the monitored condition of runway availability is a binary condition that indicates that the runway is available for use or that the runway is not available for use. The target region is that the runway is available for use and there is a single end region outside of the target region corresponding to the runway is not available for use. Entries in the approach database for the monitored condition of runway availability can differ based on altitude and can range from a caution about runway unavailability during initial approach to causing the flight management system to automatically initiate a go-around below a critical altitude. Automatic initiation of a go-around due to runway unavailability due to a second aircraft in a takeoff phase being on the runway includes considering additional factors to maintain separation distance between the aircraft and the second aircraft to compensate for a higher velocity of the aircraft, limited ability to change heading of both aircraft, and the need for both aircraft to increase altitude.

The approach monitor system receives flight plan data and limit data. The flight plan data is set before the flight and can be updated during the flight. The flight plan data specifies a runway for landing and enables determination of a target path to the runway. The limit data includes thresholds that define the regions associated with the monitored conditions for the approach phases and divisions. Values for the thresholds are based on safety limitations and performance limitations of the aircraft (e.g., stall speed, maneuvering speed, placard speeds, etc.), historical flight data, simulated flight data, or combinations thereof.

The approach monitor system receives real-time information from sensors of the aircraft, ground-based sensors, or both, and determines aircraft data from the real-time information. The aircraft data includes aircraft condition data and aircraft state data. The aircraft condition data includes warnings and failure indications for aircraft systems, alerts from external sources, position indicators for one or more adjustable aircraft components, or combinations thereof. The aircraft state data includes information indicative of altitude, position, course, attitude, airspeed, vertical speed, etc.

For each monitored condition based on the aircraft data, the approach monitor system determines a state of the monitored condition at a current altitude and determines a particular region of the monitored condition that includes the state. The regions (e.g., the target region, first regions that abut the target regions, second regions that abut the first regions, and end regions that abut the second regions) are defined by thresholds and are functions of the monitored condition and altitude. A target path is determined for the approach to landing. The approach monitor system, for each monitored condition, determines which region of the monitored condition includes the state of the monitored condition.

The approach monitor system provides notification signals to the operator when the state of the aircraft for one or more monitored conditions is outside of the corresponding target region for the one or more monitored conditions. The operator knows that the approach to landing phase is a stable approach to landing phase when the approach monitor system is not providing notification signals to the operator and that the approach to landing phase is unstable when the approach monitor system provides one or more notification signals to the operator.

The approach monitor system has the technical advantage of reducing or alleviating risks associated with unstable approaches to landing by monitoring conditions associated with the aircraft, performing decision and contingency management, notifying the operator when states for one or more monitored conditions associated with the approach to landing phase are outside of corresponding target regions for the one or more monitored conditions to enable the operator to correct the approach to a more stable approach or to perform a go-around, and responding to an unstable approach below the critical altitude. Monitoring conditions includes automated detection of aircraft state deviations relative to the target path, automated detection of diverging aircraft states relative to plan-independent limits of the aircraft, and predictive assessments based on current aircraft states and rates of change of the current aircraft states. For each monitored condition, the state of the aircraft determined based on real-time data is included in a particular region of the monitored condition. The regions are defined by one or more thresholds and altitudes.

Performing decision and contingency management includes nuisance conditioning and alert prioritization. Nuisances include (1) providing information to the operator that is not applicable to the current conditions of the aircraft or (2) providing too much information to the operator that could overwhelm and distract the operator from implementing needed commands to correct an unstable approach. Other nuisances include providing information for intermediate regions between a current region and a target region for a high priority monitored condition before the high priority monitored condition returns to the target region while the high priority monitored condition remains a high priority, providing information for intermediate regions of a high priority monitored condition when a rate of change for the high priority monitored condition indicates the high priority monitored condition is rapidly deviating from the target region and will not stay in the intermediate regions for a significant amount of time, and providing changing information for a high priority monitored condition that is rapidly oscillating between a region adjacent to the target region and the target region..

Use of the flight phase mode logic inhibits nuisance alerts associated with information that is not applicable to current conditions of the aircraft. For example, if the operator initiates a go-around during an approach to landing, the approach monitor system would indicate that one or more monitored conditions are outside of the target region and provide notification signals to the operator for one or more priority conditions if the flight phase mode logic did not provide information that allows the approach monitor system to go into standby mode due to a change from approach to landing phase to go-around. As another example, if the approach monitor system activated all condition monitors when the approach to landing phase starts, the approach monitor system would possibly provide a number of nuisance notification signals associated with changes in altitude during the initial approach due to activation of the path profile monitor and detected deviation from an intended glide slope, but such nuisance notification signals are avoided due to selective activation of the path profile monitor based on input from the flight phase mode logic when final approach is initiated.

During the approach to landing phase, states of the aircraft for multiple monitored conditions can be outside of target ranges. Each state of the aircraft for a monitored condition that is outside of the corresponding target region of the monitored condition is considered an event. During the approach to landing, information corresponding to a notification limit (e.g., one, two, or some other number) of monitored conditions that are outside of corresponding target regions are provided to the operator of the aircraft to avoid overwhelming the operator with information. In some implementations, the approach monitor system causes a display of indicia that indicates the number of additional monitored conditions, or the total number of monitored conditions, that are outside of corresponding target regions above the notification limit. Provision of the indicia informs the operator that multiple events are present and that correction of the event(s) associated with the notification signal(s) provided to the operator will not necessarily result in a stable approach.

When states of the aircraft for multiple monitored conditions are outside of target ranges, prioritization logic of the approach monitor system uses prioritization rules to determine which monitored condition is, or which monitored conditions are, to be addressed by the operator. The prioritization rules order the monitored conditions with states out of corresponding target ranges in an order that reflects the monitored conditions that will have the greatest impact on returning the aircraft to a stable approach if changed to the corresponding target region. A factor in selecting a particular monitored condition can be that correcting the particular monitored condition will also cause one or more other monitored conditions that are outside of corresponding target ranges to change to, or closer to, the corresponding target regions. For example, when the airspeed monitor indicates that airspeed is in a region above the target region and the aircraft energy monitor indicates that the aircraft energy is greater than a target region, the prioritization rules may rank airspeed as a higher priority because reducing the airspeed will also reduce the aircraft energy. Another factor used in prioritizing events is that a monitored condition with a state in an end region is prioritized higher than any monitored conditions with states in intermediate regions. The approach monitor system includes additional prioritization logic to handle multiple concurrent events that are at the same level in order to give priority based on hazards associated with not correcting the multiple concurrent events. Determination of the hazards is based on historical data, simulation data, safety analysis (e.g., a functional hazard assessment), or combinations thereof.

The approach monitor system includes rules that avoid nuisance due to a changing monitored condition. For example, the rules prevent providing an operator a notification of a change to a region outside of the target region unless the monitored condition remains in the region for a period of time. As another example, if the rate of change of the monitored condition indicates that the change will pass through one or more low regions to a high region in less than a threshold amount of time, the rules cause the notification provided to the operator to skip the notification associated with the one or more low regions and provide the notification associated with the high region. As another example, the rules cause the notification associated with a high region for a top priority monitored condition to remain until the state associated with the monitored condition returns to the target region without changing the notification to another notification associated with a lower region on the way toward the target region, as long as the monitored condition remains the top priority monitored condition.

When one or more prioritized events are determined, the approach monitor system causes one or more notification signals to be sent to the operator based on the corresponding entries in the approach database associated with particular regions of the prioritized monitored conditions that include the state of the aircraft up to the notification limit of monitored conditions. The notification content of the entries in the approach database can cause changes to visual displays; can cause playback of auditory messages (e.g., a message indicating a type of problem, a corrective action for the problem, or both); can cause display of indicia (e.g., wording) indicating a problem, a corrective action, or both; can cause a haptic signal that shakes a control or seat of the operator, can cause the flight management system to take control of the aircraft and provide notices associated with the flight management system taking control from the operator and returning control to the operator; other indications; or combinations thereof.

When there is a single event, the notification signal(s) for the region corresponding to the state of the aircraft for the monitored condition is provided to the operator by the approach monitor system. When there are two or more concurrent events, the approach monitor system uses the prioritization rules to order two monitored conditions associated with the two or more events and provides notification signal(s), up to the notification limit, corresponding to the state of the aircraft for the monitored condition(s) with the highest priority or highest priorities.

The notification signals provided to the operator can include an indicator (e.g., a visual signal, a haptic signal, an audio signal, or combinations thereof) that indicates whether the notification is a caution, a warning (e.g., one or more monitored conditions are out of corresponding target ranges and the operator needs to take corrective action), or an alert (e.g., one or more monitored conditions are significantly outside of the corresponding target regions and corrective action or a go-around is required). The notification signals can also include a suggested corrective action to return a monitored condition, associated with notification, toward the corresponding target region (e.g., visual indicia, audio instructions, or both).

When the altitude is at or below the critical altitude, some implementations enable the notifications to provide warnings, alerts, allow automatic initiation of a go-around, or combinations thereof. For particular first regions (e.g., one or more regions that abut the target region and are not end regions) the notification signals do not cause the flight management system to take control of the aircraft, but provide an indication of an unstable landing (a visual signal, an audio signal, a haptic signal, or combinations thereof), a corrective action to be taken, or both.

When the altitude is at or below the critical altitude, the notification signals for particular second regions (e.g., one or more end regions or other regions outside of the target region) can include instructions to correct the monitored condition, and the flight management system automatically initiates a go-around when significant change to the monitored condition is not indicated before an altitude associated with the next region of the monitored condition. For example, if the region including the state of the aircraft for the airspeed monitor, the aircraft energy monitor, or both, is a second region between an end region and a first region and the aircraft is below the critical altitude, the notification signals include an alert provided to the operator including an instruction to initiate a go-around. If the operator chooses not to initiate the go-around and a rate of change of the state does not exceed a threshold before the flare altitude or when the operator initiates the flare, the notification signals for the region cause the approach monitor system to make the flight management system automatically initiate a go-around, provide notification to the operator that the flight management system is initiating the go-around, cause the flight management system to inform the operator when control of the aircraft is returned to the operator, and provide a signal to the flight phase mode logic that causes the approach monitor system to change to the standby mode.

When the altitude is at or below the critical altitude and regions that include the state of the aircraft for one or more monitored conditions are end regions, the notification content causes automatic initiation of a go-around. After initiation of the go-around, the notification informs the operator that control of the aircraft is returned to the operator.

When the approach monitor system is capable of automatically causing a go-around, the approach monitor system can receive operator input that the approach to landing phase is an emergency approach, or can receive input from the flight management system indicating the aircraft is in an emergency approach (e.g., the flight management system determines that communication from the operator to an air traffic control system declares the approach and/or landing an emergency, the flight management system determines that the approach is an emergency approach based on a determination of a low fuel condition or that one or more engines are non-functional resulting in an emergency approach, etc.). When the approach is an emergency approach, the approach monitor system does not provide notification signals that the operator should initiate a go-around, and does not automatically initiate a go-around that would be automatically initiated if the approach was not an emergency approach. In some implementations, actions performable by the operator to make the approach to landing phase less unstable are substituted for notifications that would inform the operator to go-around when the approach to landing phase is an emergency approach.

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features referred to herein as a group or a type are referenced (e.g., when no particular one of the features is being referenced), the reference number is used without a distinguishing letter. However, when one particular feature of multiple features of the same type is referred to herein, the reference number is used with the distinguishing letter. For example, FIG. 3 includes end regions 306A and 306B. When referring to a particular one of these end regions, a distinguishing letter is utilized to identify the particular end region (e.g., end region 306A). However, when referring to any arbitrary one of these end regions or to these end regions as a group, the reference number 306 is used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. The terms "comprise," "comprises," and "comprising" are used interchangeably with "include," "includes," or "including." Additionally, the term "wherein" is used interchangeably with the term "where." As used herein, an ordinal term (e.g., "first," "second," "third," etc.) used to modify an element, such as a structure, a component, an operation, etc., does not by itself indicate any priority, order, or arrangement of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

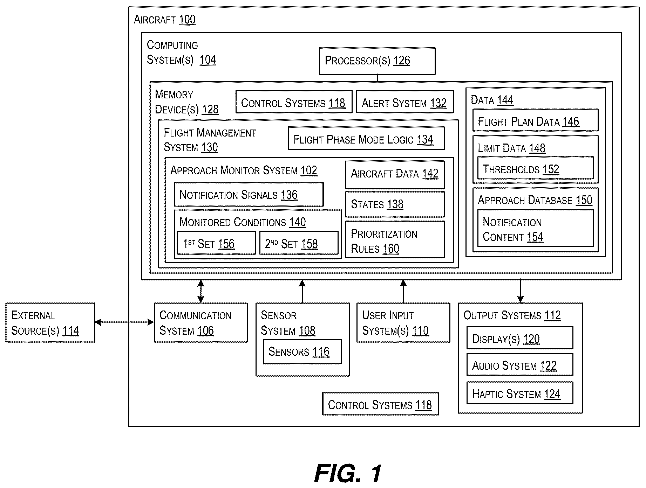

FIG. 1 is a block diagram of an aircraft 100 with an approach monitor system 102 configured to respond to an unstable approach during an approach to landing phase for the aircraft 100. The aircraft 100 includes one or more computing system(s) 104, a communication system 106, a sensor system 108, user input system(s) 110, output systems 112, other systems, or combinations thereof. For an aircraft 100 that can be remotely controlled, at least a portion of the user input system(s) 110 and at least a portion of the output systems 112 are external to the aircraft 100 and receive information from, and provide input to, the computing system(s) 104 via the communication system 106.

A first portion of the communication system 106 is coupled to the computing system(s) 104. The communication system 106 can also have a second portion that is independent of the computing system(s) 104. The communication system 106 supports communication of voice and data with external source(s) 114. The external source(s) 114 can be air traffic control services, ground crew communication devices, weather information services, aircraft identification systems (e.g., automatic dependent surveillance-broadcast (ADS-B) systems), program update systems for software, data, or both, of the computing system(s) 104, user input system(s) 110 and output systems 112 for an aircraft 100 that can be remotely controlled, other services, or combinations thereof.

The sensor system 108 provides sensor data from sensors 116 of the aircraft 100 to the computing system(s) 104, to one or more instrument panels, or both. The sensor data provides information regarding aircraft conditions and status of aircraft systems. Aircraft condition data includes data corresponding to altitude, attitude, airspeed, vertical speed (e.g., ascent rate or descent rate), location, wind conditions, air temperature, etc. Information for status of aircraft systems is information regarding the state of the aircraft (e.g., fuel level, engine temperatures, throttle position, landing gear position, flap and slat positions, etc.).

The user input system(s) 110 enable the operator of the aircraft 100 to provide input that controls operation of the aircraft 100. The user input system(s) 110 include steering controls, levers, buttons, dials, knobs, switches, one or more keyboards, one or more keypads, one or more touchscreens, one or more microphones, other input devices, or combinations thereof. In some implementations, the aircraft 100 is a fly-by-wire system where some of the user input system(s) 110 provide input to the computing system(s) 104, and the computing system(s) 104 implements one or more actions via control systems 118 of the computing system(s) 104 based on the input. In other implementations, or as backup for fly-by-wire systems, some of the user input system(s) 110 are directly coupled to control systems 118 of the aircraft 100 to control one or more aircraft systems based on user input. One or more of the sensors 116 provide data resulting from changes in flight conditions, flight configuration, or both, due to the user input to the computing system(s) 104, the output systems 112, or both.

The output systems 112 provide information to the operator of the aircraft 100. The output systems 112 include one or more displays 120 (e.g., a primary flight display and one or more secondary flight displays) to display text (e.g., information associated with waypoints, alerts, cautions, warnings, etc.) and to display graphics associated with flight conditions (e.g., location information, altitude, attitude, speed, fuel, etc.), an audio system 122 (e.g., headphones or other auditory devices to provide sound to the operator), and a haptic system 124 (e.g., a seat shaker, a stick shaker, etc.). The output systems 112 can include additional output devices such as instrument panels, gauges, condition indicators, other devices, or combinations thereof.

Each of the computing system(s) 104 includes one or more processors 126 and one or more memory devices 128. The one or more memory devices 128 store instructions executable by the one or more processors 126 to perform operations. The instructions include a flight management system 130, the control systems 118, and an alert system 132. The flight management system 130 performs tasks to determine a target path of the aircraft 100 based on a flight plan, performs tasks to maintain the target path, or both, and the flight management system 130 provides information via the output systems 112 to the operator of the aircraft 100 to enable the operator to establish and maintain the target path or to take appropriate actions should a real-time path of the aircraft 100 deviate from the target path.

The flight management system 130 includes the approach monitor system 102 and flight phase mode logic 134. The approach monitor system 102 is integrated into the flight management system 130 or is a separate program (e.g., set of instructions) that interfaces with the flight management system 130. The flight phase mode logic 134 is integrated into the approach monitor system 102, the flight management system 130, or is a separate program that interfaces with the both the approach monitor system 102 and the flight management system 130.

The approach monitor system 102 monitors conditions during approach phases and divisions of an approach to landing. The approach monitor system 102 provides notification signals 136 to an operator of the aircraft 100, the computer system(s) 104, or both in response to occurrence of one or more events. An event occurs when a state 138 for a particular monitored condition of monitored conditions 140 based on aircraft data 142 is outside of a target region for the monitored condition 140, which indicates that the approach to landing phase is becoming unstable or is unstable. Notification signals 136 provided to the operator by the approach monitor system 102 include tiered notifications to indicate an amount of deviation from the target regions of the monitored conditions 140, a cause for providing the notification signals 136, a course of action for the operator to take, or combinations thereof. The course of action can be a corrective action to return toward conditions associated with a target path for the approach to landing phase or can inform the operator to initiate a go-around. In some implementations, the approach monitor system 102 automatically initiates a go-around during the approach to landing phase when the aircraft 100 is below a critical altitude and the states 138 of one or more of the monitored conditions 140 are in regions that indicate an undesirable landing (e.g., a rough landing or a landing that results in damage) could occur if the aircraft 100 is allowed to continue to a landing.

The approach monitor system 102 receives input from the computing system(s) 104. The input includes the approach plan, aircraft condition data, status of aircraft systems, output of the flight phase mode logic 134, other data, or combinations thereof. The flight phase mode logic 134 includes instructions executable by the one or more processors 126 to receive aircraft phase input data; analyze the aircraft phase input data to determine the phase of the aircraft, and if applicable, one or more divisions of the phase; and provide the phase, the division(s), or both, as output. The aircraft phase input data includes aircraft condition data, status of aircraft systems, operator input via the user input system(s) 110 (e.g., control input and voice input), other data, or combinations thereof.

The control systems 118 include control instructions executable by the processor(s) 126 to receive input from one or more systems (e.g., the flight management system 130, the approach monitor system 102, the user input system(s) 110, other systems, or combinations thereof), and provide output to control one or more other systems of the aircraft (e.g., the communication system 106, flight configuration systems, other systems, or combinations thereof). The alert system 132 provides output via the output systems 112 to the operator of the aircraft 100.

The one or more memory devices 128 also include data 144 used by the one or more processors 126 when implementing the instructions. The data 144 includes flight plan data 146, limit data 148, and an approach database 150. The flight plan data 146 includes data that establishes the flight plan. The flight plan data 146 enables the one or more processors 126 to determine the target path and target conditions for monitored conditions along the target path. For an approach to landing, the flight plan data 146 includes information that identifies an airport and a runway where the aircraft 100 is to land, identifies an initial contact location of the runway for the landing, other information, or combinations thereof. During the flight, a portion of the flight plan data associated with approach to landing phase can be modified based on operator input, input based on, or from, the external source(s) 114 (e.g., air traffic control input), or combinations thereof.

The limit data 148 includes information about performance limits of the aircraft 100 and information about the runway that the aircraft 100 is to land on (e.g., elevation, length, etc.). The limit data 148 also includes thresholds 152 used when executing the instructions. The thresholds 152 include particular thresholds that define regions (e.g., target regions and end regions) for the monitored conditions 140 during the approach to landing.

The approach database 150 includes notification content 154 for information to provide to the operator of the aircraft 100. The notification content 154 includes information content, presentation information (e.g., particular notification tone; presentation style for text output (e.g., font size and emphasis characteristics); device, intensity, and duration of a haptic signal; etc.), instructions to the flight management system 130, other information, or combinations thereof, for events that can occur during the approach to landing.

During operation of the aircraft 100, the flight management system 130 determines the target path to the runway where the aircraft 100 is to land. The target path to the runway is determined from the flight plan data 146 provided to the computing system(s) 104. The flight plan data 146 is provided before flight of the aircraft 100 and is updated during the flight. The flight plan data 146 includes identifiers of a destination airport and a runway to be used for landing. When the operator of the aircraft 100 initiates an approach to landing, the flight management system 130 provides information and a graphic display to help the operator follow the target path. The flight phase mode logic 134 of the flight management system 130 provides output that indicates a particular phase of flight and subdivisions of the phase.

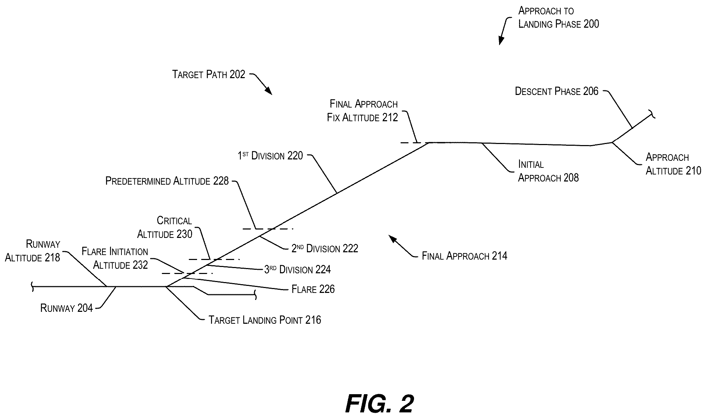

FIG. 2 depicts a representation of an approach to landing phase 200 of a flight of the aircraft 100 of FIG. 1 that includes a target path 202 to a runway 204. During the flight of the aircraft 100, the computing system(s) 104 receive information from one or more external sources 114, from the operator of the aircraft 100 via the user input system(s) 110, or both, that is stored as flight plan data 146. When the flight plan data 146 is sufficient to determine the target path 202 to the runway 204, the target path 202 is determined by the flight management system 130 and provided to the approach monitor system 102.

The approach monitor system 102 determines, based on output of the flight phase mode logic 134 that the aircraft 100 is in the approach to landing phase 200 of the flight. For example, after a descent phase 206 of the flight, the flight phase mode logic 134 determines that the aircraft 100 is in initial approach 208 of the approach to landing phase 200 at approach altitude 210, and the approach monitor system 102 transitions from a standby mode to an active mode based on output of the flight phase mode logic 134. The approach monitor system 102 activates selected condition monitors to determine the state 138 for each monitored condition 140 of a first set 156 of the monitored conditions 140 based on the aircraft data 142 (e.g., data from the sensors 116 of the sensor system 108, data from the external source(s) 114, or both). A single condition monitor can determine the state 138 for one or more monitored conditions 140. The selected condition monitors include an airspeed profile monitor, a plan reasonableness monitor to determine one or more monitored conditions 140 associated with orientation relative to the runway 204 and altitude of the aircraft relative to the runway 204, other condition monitors, or combinations thereof. During the initial approach 208, the operator of the aircraft 100 and the flight management system 130 adjust airspeed, capture and track a centerline of the runway 204, and change altitude so that aircraft 100 is at a final approach fix altitude 212 at a start of a final approach 214.

The target path 202 includes the initial approach 208, the final approach 214 having a glide slope, and a target landing point 216 near a first end of the runway 204 at a runway altitude 218. The initial approach 208 starts at the initial approach altitude 210 and continues to a start of the final approach 214. The flight phase mode logic 134 provides particular output to the approach monitor system 102 that indicates the start of the final approach 214.

In response to the particular output, the approach monitor system 102 activates one or more additional condition monitors to determine the state 138 for each monitored condition 140 of a second set 158 of monitored conditions based on the aircraft data 142. The second set 158 of monitored conditions 140 includes one or more of the first set 156 of monitored conditions 140 and one or more monitored conditions 140 determined by the one or more additional condition monitors. In some implementations, the second set 158 of monitored conditions 140 includes all the monitored conditions 140 of the first set 156 of monitored conditions 140. In other implementations, the approach monitor system 102 deactivates one or more active condition monitors in response to the particular output and the second set 158 of monitored conditions 140 does not include all monitored conditions 140 of the first set 156 of monitored conditions 140. The first set 156 and the second set 158 include one or more common monitored conditions 140 (e.g., airspeed) and the second set 158 includes one or more additional monitored conditions 140 (e.g., glide slope) not included in the first set 156 of monitored conditions 140.

The final approach 214 is separated into a set of divisions including a first division 220, a second division 222, a third division 224, and a flare 226. In other implementations, the final approach 214 is separated into a different set of divisions having fewer divisions or more divisions.

When the aircraft 100 is in the first division 220, the altitude of the aircraft 100 is at or below the final approach fix altitude 212 and at or above the predetermined altitude 228. The aircraft 100 is descending along the glide slope. In some implementations, the predetermined altitude 228 is based on visibility conditions. When the visibility is low (e.g., the approach is an instrument approach), the predetermined altitude 228 is a first value (e.g., 1000 ft above the runway altitude 218) and when the visibility is high, the predetermined altitude 228 is a second value (e.g., 500 ft above the runway altitude 218). In other embodiments, the predetermined altitude has a different value than 1000 ft or 500 ft above the runway altitude 218.

When the aircraft 100 is in the second division 222, the altitude of the aircraft 100 is at or below the predetermined altitude 228 and at or above a critical altitude 230. The critical altitude 230 can be 100 feet, 50 feet, 40 feet, or some other height above the runway altitude 218. In some implementations, the approach monitor system 102 cannot automatically initiate a go-around of the aircraft 100. In such implementations, the critical altitude 230 is not used or set. When the aircraft 100 is in the third division 224, the altitude of the aircraft 100 is at or below the critical altitude 230. During the third division 224, the approach monitor system 102 is able to cause automatic initiation of a go-around in response to a determination by the approach monitor system 102 that the state 138 of the aircraft 100 for one or more monitored conditions 140 is in a region for the monitored condition 140 (e.g., an end region of the monitored condition 140) that indicates that the approach is an unstable approach.

Before the aircraft 100 lands, the operator performs the flare 226 at or near flare initiation altitude 232 to raise a nose of the aircraft 100 so that wheels of main landing gear of the aircraft 100 contact the runway 204 before wheels of nose landing gear. For aircraft 100 capable of performing an automatic go-around, the approach monitor system 102 is able to automatically initiate a go-around during the flare 226 if the approach monitor system 102 determines that continuation of the approach to landing phase 200 could result in an unwanted landing.

Based on the target path 202, the approach monitor system 102 determines the state 138 for each active monitored condition 140 and determines a corresponding region associated with the state 138 for the initial approach 208 and the divisions 220-226 of the final approach 214 of the approach to landing phase 200. To determine the regions, the approach monitor system 102 retrieves or determines one or more thresholds 152 from the limit data 148 for each monitored condition 140 for each of the initial approach 208 and the divisions 220-226 of the final approach 214.

FIG. 3 depicts regions determined for a monitored condition 140 of airspeed during the approach to landing phase 200 depicted in FIG. 2. The regions include target regions 302, first regions 304, end regions 306, and second regions 308. A center of the target regions 302 corresponds to the target airspeed 310 based on the target path 202. Each region 304-308 is associated with particular notification content 154 in one or more corresponding entries in the approach database 150. Notification content 154 can be tiered to indicate to the operator a severity of the state 138 of the monitored condition 140 of the aircraft 100.

During the initial approach 208 from the approach altitude 210 to the final approach fix altitude 212, a first set of the thresholds 152 that do not vary with altitude define the target region 302A, first regions 304A, 304B, and end regions 306A, 306B. The first set of the thresholds 152 include first thresholds that define ends of the target region 302A and starts of the first second regions 304A, 304B, second thresholds that define ends of the first regions 304A, 304B and starts of the end regions 306A, 306B. The end regions 306A, 306B may be open-ended or ends may be defined by boundary limits 312A, 312B associated with the aircraft 100.

During the first division 220 of the final approach 214 (shown in FIG. 2) from the final approach fix altitude 212 to the predetermined altitude 228, a second set of the thresholds 152 that vary with altitude define the target region 302B, first regions 304C, 304D, second regions 308C, 308D, and end regions 306C, 306D. The second set of the thresholds 152 include first thresholds that define ends of the target region 302B and starts of the first regions 304C, 304D, third thresholds that define ends of the first regions 304C, 304D and starts of the second regions 308C, 308D, and second thresholds that define ends of the second regions 308C, 308D and starts of the end regions 306C, 306D.

After the predetermined altitude 228, a third set of the thresholds 152 that define the regions 302-308 are constant thresholds to the runway altitude 218 and define the target region 302C. During the second division 222 from the predefined altitude 228 to the critical altitude 230, the third set of the thresholds 152 that define the regions 302-308 define first regions 304E, 304F, second regions 308E, 308F, and end regions 306E, 306F.

Below the critical altitude 230 to the runway altitude 218, the third set of the thresholds 152 define end regions 306G, 306H. The end regions 306G, 306H correspond to regions where the approach monitor system 102 causes the flight management system 130 to automatically initiate a go-around.

During the third division 224 from the critical altitude 230 to the flare altitude 232 or when the operator initiates the flare 226, the third set of the thresholds 152 define the first regions 304J, 304K and the second regions 308J, 308K. Also, during the flare 226 from the flare altitude 232 or when the operator initiates the flare 226 to the runway altitude 218, the third set of thresholds define the first regions 304L, 304M, and the second regions 308L, 308M.

The regions for other monitored conditions may be similar to or different than the regions 302-308 for the monitored condition 140 of airspeed. For example, the regions for the monitored condition 140 of runway availability are different than the regions for the monitored condition 140 of airspeed because the monitored condition 140 of runway availability is a binary condition with a target region of "available" and a number of distinct end regions dependent on the altitude of the aircraft 100.

During the approach to landing phase 200 of a flight, the approach monitor system 102 of FIG. 1 receives the aircraft data 142 based on output of the sensor system 108 and other information. The aircraft data 142 enables the approach monitor system 102 to determine the states 138 for the monitored conditions 140 and an altitude of the aircraft 100. Based on the altitude and the target path 202 of FIG. 2, the approach monitor system 102 determines a target region 302 for each monitored condition 140, a deviation of the state 138 of the monitored condition 140 from the target region 302 for each monitored condition 140, and an identifier of the region 302-308 that includes the state 138 for each monitored condition 140. During the approach to landing phase 200, the flight phase mode logic 134 provides the approach monitor system 102 with the current phase and phase division(s) for the aircraft 100.

When the states 138 of all the monitored conditions 140 are in corresponding target regions 302, the approach to landing phase 200 is a stable approach. When one or more of the states 138 are in regions outside of the corresponding target regions 302 for the monitored conditions 140, one or more events are occurring and the approach to landing phase 200 is unstable or becoming unstable.

When there is a single event, the single event is a notification event. When there are multiple events, prioritization logic of the approach monitor system 102 identifies a number of events up to the notification limit of events as notification events based on prioritization rules 160. The prioritization rules 160 determine which events are to be identified as the notification event(s) by giving higher priority to regions farther away from the target regions with a highest priority given to the end regions. When there are multiple events with the highest priority in the same region level, the prioritization rules 160 give higher priority to one or more particular events based on hazards associated with not correcting the one or more particular events. The hazards associated with not correcting the one or more particular events are determined by analysis of historical flight data, simulated flight data, or both. The prioritization rules 160 identify the events with the highest determined priority, up to the limited number of events, as the notification event(s).

The approach monitor system 102 tracks temporal data for the monitored conditions 140 to limit nuisance notifications based on one or more persistence thresholds. For example, the approach monitor system 102 stores a time when the state 138 for a monitored condition 140 changes from the target region 302 to a first region 304 outside of the target region 302 (e.g., from target region 302B to region 304C during the first division 220). If the time that the approach monitor system 102 detects the state 138 is in the first region 304 is less than a first persistence threshold (e.g., 0.02 seconds, 0.05 seconds, or some other time) before the state 138 returns to the target region 302, the region is identified as the target region 302 until the first persistence threshold is exceeded, and then the region is identified as the first region 304. The value of the first persistence threshold for a state transition from the target region 302 to the first region 304 can be different than a second persistence threshold for state transition from the first region 304 to the target region 302. In some implementations, a persistence threshold is not used for real-time state transitions into one of the end regions 308 that do not result in an automatic go-around and satisfaction of a third persistence threshold (e.g., 0.1 seconds, 0.25 seconds, 0.5 seconds, or some other time) is needed before the approach monitor system 102 automatically initiates a go-around for real-time state transition into an end region 306 (e.g., end region 306G or 306H) that does result in an automatic go-around.

In some implementations, the approach monitor system 102 stores data indicating a trend for each of the monitored conditions 140. If the trend for a monitored condition 140 indicates that the state 138 for the monitored condition 140 is going to transition from a first region (e.g., region 302 or region 304) to a second region further away from the target region within a threshold amount of time (e.g., 0.2 seconds, 0.3 seconds, 0.4 seconds, or some other amount of time), and the real-time state does transition between the two regions, the operational region is identified as the second region even if the time in the second region does not exceed the persistence threshold associated with the real-time state transition between the regions.

When one or more states 138 for the monitored conditions 140 are not in corresponding target regions, the approach monitor system 102 causes the notification signals 136 to be provided to the operator of the aircraft 100. Notification signals 136 associated with a limited number (i.e., a number up to the notification limit) of states 138 that are not in corresponding target regions are provided when multiple states 138 of monitored conditions 140 are outside of corresponding target ranges to avoid inundating the operator with information. The particular monitored conditions 140 for which notifications signals 136 are provided correspond to highest priority monitored conditions 140 of the monitored conditions 140 with states 138 that are not in corresponding target regions as determined by the prioritization logic of the approach monitor system 102 using the prioritization rules 160.

When the state 138 for a first monitored condition 140 with sufficient priority to be a notification event is in a particular first region (e.g., an end region 306 of FIG. 3), the notification signals 136 generated for the first monitored condition 140 are output from the approach monitor system 102. When one or more non-target regions (e.g., a first region 304, a second region 308, or both) are present between the particular non-target region and the target region, the approach monitor system 102 does not change the notification signals 136 associated with the state 138 until the state 138 returns to the target region or the priority of a second monitored condition 140 becomes higher than the priority of the first monitored condition 140. Not changing the region associated with the state 138 prevents the approach monitor system 102 from providing a notification to the operator about a change to another region that could distract the operator from concentrating on correcting the first monitored condition 140 to the target region.

The approach database 150 includes, for each monitored condition 140, one or more entries for each region outside of the target region of the monitored condition 140. The approach database 150 also includes an identifier of the monitored condition and an identifier of each region that allows the approach monitor system to access appropriate content corresponding to the state 138 of the aircraft 100 for a monitored condition 140 outside of the target region when the state 138 corresponds to a notification event. For example, the approach database 150 includes a page and page identifier associated with the monitored condition 140 of airspeed, and the page for airspeed includes one or more entries and corresponding identifiers for each of the regions 304, 306, and 308 depicted in FIG. 3.

For states 138 of monitored conditions 140 that are out of the corresponding target ranges and determined to be notification events using the prioritization rules 160 of the approach monitor system 102, the approach monitor system 102 retrieves notification content 154 from the approach database 150 corresponding to the regions of the monitored conditions 140 that include the states 138. The notification content 154 corresponds to the notification signals 136 to be provided to the operator or the computing system(s) 104. The entries in the approach database 150 for notification content 154 identify content to be presented via one or more of the output systems 112 to the operator of the aircraft 100, a presentation style of the content (e.g., font characteristics of text; duration of tones; and device, intensity, and duration of haptic output), or both. The entries in the approach database 150 for notification content 154 identify a tone and/or message (e.g., "caution", "warning," or "alert") to play via the audio system 122 that indicates a level of the notification, device(s) and intensities for haptic sensation(s) via the haptic system 124, or both. The entries in the approach database 150 for notification content 154 may also include an action for the operator to take and a reason for taking the action presented as a text notification, a voice notification, or both. For example, the notification signals 136 to be presented include text presented to a primary flight display of the display(s) 120 that states "Increase speed - airspeed low" for the notification content 154 of the approach database 150 for the monitored condition 140 of airspeed when the real-time state is in the region 304A of FIG. 3.

The notification signals 136 provided to the operator for notification events associated with monitored conditions 140 are tiered responses. No notification signal is provided when all the states 138 are in the corresponding target regions to indicate to the operator that the approach to landing phase is a stable approach. A first tier response is a caution that indicates a monitored condition 140 is, or will soon be, slightly out of a corresponding target range. In some implementations, a first tier response includes an audio signal to indicate a notification event and a first change to a display to emphasize a readout of a value that shows that the corresponding monitored condition 140 is out of the target range. The entries in the approach database 150 for the monitored condition 140 of airspeed corresponding to the first regions 304A-F and 304J-M of FIG. 3 are first tier responses. For example, when the state 138 of the monitored condition 140 of airspeed is in the first region 304C, the notification signals 136 provided to the operator by the approach monitor system 102 can be a chime via the audio system 122 to indicate a problem and a blinking white border that surrounds the readout of the actual airspeed on the primary flight display (PFD).

A second tier response is a warning that indicates a monitored condition 140 is out of a corresponding target range and the operator needs to take corrective action. In some implementations, a second tier response includes an audio signal to indicate a level of the notification event, an audio message indicating the notification event, a text message via an engine indicating and crew alerting system (EICAS), and a second change to a display to emphasize a readout of a value that shows that the corresponding monitored condition 140 is out of the target range, where the second change is different than the first change associated with first tier responses. The entries in the approach database 150 for the monitored condition 140 of airspeed corresponding to the first regions 304J-304M, and the second regions 308C-308F of FIG. 3 are second tier responses. For example, when the state 138 of the monitored condition 140 of airspeed for the aircraft 100 is in the second region 308E, the notification signals 136 provided to the operator by the approach monitor system 102 can be a warning tone followed by the aural message "Airspeed! Airspeed!," an EICAS message that states "AIRSPEED" in an amber color to the right of the PFD, and a blinking amber border that surrounds the readout of the actual airspeed on the PFD.

A third tier response is an alert that indicates a monitored condition 140 is out of a corresponding target range and the operator is required to take corrective action. In some implementations, a third tier response includes an audio signal and a haptic signal to indicate the notification event, an audio alert indicative of an alert and a message indicative of the notification event, a directive message on the PFD, and a third change to a display to emphasize that the corresponding monitored condition 140 is out of the target range, where the third change is different than the first change associated with first tier responses and the second change associated with second tier responses. The entries in the approach database 150 for the monitored condition 140 of airspeed corresponding to the end regions 306A-306F and the second regions 308J-308M of FIG. 3 are third tier responses. For example, when the state 138 of the monitored condition 140 of airspeed is in the end region 306E, the notification signals 136 provided to the operator by the approach monitor system 102 can be a haptic signal (e.g., a seat shake), an alert tone followed by the aural message "Go Around! Go Around!," the message "GO AROUND" in red on the PFD, and a red border that surrounds the readout of the actual airspeed on the PFD.

A fourth tier response corresponds to the computing system(s) 104 taking control of the aircraft 100 from the operator and initiating a go-around. The notification content 154 includes instructions for the approach monitor system 102 to send commands to the control systems 118 to ignore user input, commands to the flight management system 130 to initiate the go-around, an audio message of "Go-Around Initiated, Operator input disabled," the message "Operator Input Disabled" on the PFD, and an audio signal, second audio message, and text message informing the operator that operator input is restored after the initiation of the go-around. The entries in the approach database 150 for the monitored condition 140 of airspeed corresponding to the end regions 306G, 306H are fourth tier responses.

In some implementations, the notification content 154 corresponding to one or more regions are conditional. In some implementations, selected regions are initially third tier responses, but change to fourth tier responses if one or more conditions are not satisfied before a particular altitude is reached. The entries in the approach database 150 for the monitored condition 140 of airspeed corresponding to the end regions 308J-308M can be conditional. For example, when the state 138 of the monitored condition 140 of airspeed is in the second region 308J, the notification signals 136 provided to the operator by the approach monitor system 102 are a third tier response that changes to a fourth tier response if the operator initiates the flare 226 or the aircraft 100 reaches the flare initiation altitude 232 and the rate of change of the airspeed is not above a first threshold rate. As another example, when the state 138 of the monitored condition 140 of airspeed for the aircraft 100 is in the second region 308M, the notification signals 136 provided to the operator by the approach monitor system 102 are a third tier response that changes to a fourth tier response if the aircraft 100 contacts the runway 204 and the rate of change of the airspeed is not below a second threshold rate.

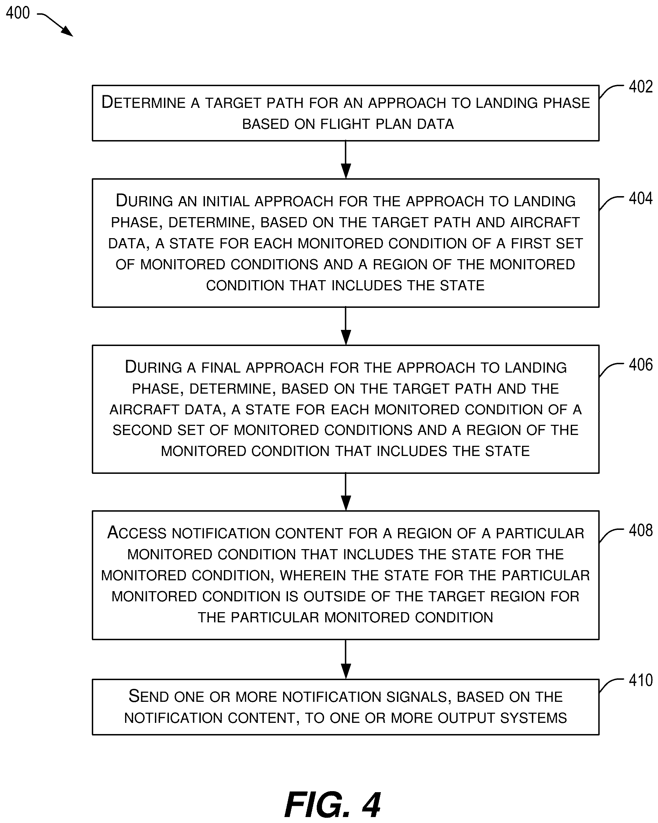

FIG. 4 is a flow chart of a method 400 of response to an unstable approach during an approach to landing phase of the aircraft 100. The method 400 is performed by one or more of the computing system(s) 104 of the aircraft 100 using the approach monitor system 102. The method 400, at block 402, includes determining a target path for an approach to landing phase based on flight plan data. For example, one or more of the computing system(s) 104 determine the target path 202 based on the flight plan data 146 and provide a representation of the target path 202 to the approach monitor system 102.

The method 400, at block 404, includes, during an initial approach for the approach to landing phase, determining, based on the target path and aircraft data, a state for each monitored condition of a first set of monitored conditions and a region of the monitored condition that includes the state. Each monitored condition includes a target region. For example, the flight phase mode logic 134 provides first output to the approach monitor system 102 that indicates that the initial approach 208 of the approach to landing phase 200 started. In response to the first output, the approach monitor system 102 changes from a standby mode to an active mode. The approach monitor system 102 activates one or more condition monitors to determine the state 138 for each monitored condition 140 of the first set 156 of monitored conditions 140. The approach monitor system 102 also determines a region of the monitored condition 140 that includes the state 138. The regions are determined based on the thresholds 152 retrieved from the memory device(s) 128. For each monitored condition 140, the regions include a target region and one or more regions outside of the target region.

The method 400, at block 406, includes, during a final approach for the approach to landing phase, determining, based on the target path and the aircraft data, a state for each monitored condition of a second set of monitored conditions and a region of the monitored condition that includes the state. The second set of monitored conditions includes one or more of the first set of monitored conditions and one or more additional monitored conditions. Each of the one or more additional monitored conditions includes a target region. For example, the flight phase mode logic 134 provides second output to the approach monitor system 102 that indicates that the final approach 214 of the approach to landing phase 200 started. The approach monitor system 102 activates one or more additional condition monitors to determine the state 138 for each monitored condition 140 of the second set 158 of monitored conditions 140. The approach monitor system 102 also determines a region of the monitored condition 140 that includes the state 138. The second set 158 of monitored conditions 140 includes one or more of the first set 156 of monitored conditions 140 and one or more additional monitored conditions 140. Each of the one or more additional monitored conditions 140 includes a target region. In some implementations, the second set 158 of monitored conditions 140 includes all the monitored conditions 140 of the first set 156 of monitored conditions 140. In other implementations, the approach monitor system 102 deactivates one or more active condition monitors in response to the particular output and the second set 158 of monitored conditions 140 does not include all monitored conditions 140 of the first set 156 of monitored conditions 140. The first set 156 and the second set 158 include one or more common monitored conditions 140 (e.g., airspeed) and the second set 158 includes one or more additional monitored conditions 140 (e.g., glide slope) not included in the first set 156 of monitored conditions 140.

The method 400, at block 408, includes accessing notification content for a region of a particular monitored condition that includes the state for the monitored condition. The state for the particular monitored condition is outside of the target region for the particular monitored condition. For example, at times during the approach to landing phase 200, only a single state 138 for a particular monitored condition 140 of the monitored conditions (e.g., the first set 156 of monitored conditions 140 during initial approach 208 or the second set 158 of monitored conditions 140 during final approach 214) is outside of the corresponding target region. The approach monitor system 102 accesses notification content 154 corresponding to the region for the state 138 of the particular monitored condition 140 from the approach database 150.

As another example, at times during the approach to landing phase 200, multiple states 138 for monitored conditions 140 of the monitored conditions (e.g., the first set 156 of monitored conditions 140 during initial approach 208 or the second set 158 of monitored conditions 140 during final approach 214) are outside of the corresponding target regions. When the number of states 138 outside of corresponding target ranges is equal to or less than a notification limit (e.g., one, two, or some other limited number) of monitored conditions 140 that can be simultaneously provided to the operator, the approach monitor system 102 accesses notification content 154 for a region of each monitored condition 140 that is outside of the corresponding target region from the approach database 150. When the number of states 138 outside of corresponding target ranges is greater than the notification limit, the approach monitor system 102 utilizes prioritization logic to order the multiple states 138 for monitored conditions based on the prioritization rules 160, selects the monitored conditions with the highest priorities up to the number of monitored conditions equaling the prioritization limit, and accesses notification content 154 for the region of each of the selected monitored conditions 140 that includes the corresponding state 138. For example, when the notification limit is one and the approach monitor system 102 determines that two or more states 138 of monitored conditions 140 are outside of corresponding target regions, application of the prioritization rules 160 to the monitored conditions 140 determines a highest priority monitored condition 140, and the approach monitor system 102 identifies the highest priority monitored condition 140 as the particular monitored condition 140 of block 408.

The method 400, at block 410, also includes sending one or more notification signals, based on the notification content from the computing system, to one or more output systems. For example, the approach monitor system 102 of the one or more computing systems 104 generates the notification signals 136 based on the notification content 154. A portion of the notification signals 136 are provided to the operator via the one or more output systems 112. When the notification content 154 instructs the approach monitor system 102 to cause initiation of a go-around, a second portion of the notification signals 136 are sent from the approach monitor system 102 to the control systems 118, the flight management system 130, or both, to initiate the go-around, to prevent the operator from controlling the aircraft 100 during initiation of the go-around, and to return control of the aircraft 100 to the operator after initiation of the go-around.

In addition, the method 400 can include additional functionality to realize one or more of the technical advantages described in more detail above. For example, the method 400 includes determining that a second monitored condition has the highest priority based on the state of the second monitored condition. Responsive to a determination that the one or more notification signals are not associated with the second monitored condition, the method 400 includes accessing second notification content for a particular region of the second monitored condition that includes the state of the second monitored condition. The method 400 also includes sending one or more notification signals based on the second notification content to the one or more output systems.

As another example, the regions of the particular monitored condition include the target region, a first end region, and one or more intermediate regions between the target region and the first end region. The method 400 includes determining an updated state for the particular monitored condition based on current aircraft data, the flight plan data, or both. The method 400 also includes, in response to a first determination that the region of the particular monitored condition that includes the updated state changed to an intermediate region of the one or more intermediate regions that is closer to the target region and the particular monitored condition has a highest priority of monitored conditions outside of corresponding target regions, continuing to determine updated states based on current aircraft data without accessing notification content for the particular monitored condition.

As another example, the method 400 includes determining updated states for the monitored conditions based on current aircraft data, the flight plan data, or both. The method 400 also includes in response to a determination that the region of the particular monitored condition that includes the updated state changed to the target region and no states for monitored conditions are outside of the corresponding target regions, ending provision of one or more notification signals to the one or more output systems to indicate a stable approach.

As another example, the regions of a first monitored condition include the target region, a first end region, and one or more intermediate regions between the target region and the first end region. The method 400 includes determining a rate of change of the state of the first monitored condition away from the target region. The method 400 also includes, in response to the rate of change indicating the state of the first monitored condition will be included in a particular region before passage of a threshold amount of time when one or more regions are between a first region including a current state of the monitored condition and the particular region, pausing determination of the state of the first monitored condition until passage of the threshold amount of time.

As another example, the computing system(s) comprise both flight phase mode logic to determine a current flight phase and an approach monitor system to provide notification when approach is not a stable approach, to automatically initiate a go-around based on one or more conditions at an altitude below a critical height, or both. The method 400 includes changing the approach monitor system to a standby mode in response to initiation of a go-around, and in response to the current flight phase being a particular phase other than approach to landing phase as indicated by flight phase mode logic. The method 400 also includes activating the approach monitor in response to the flight phase mode logic determining that the current flight phase changes to the approach to landing phase from another phase of flight.

In some examples, any of the methods hereby described can further comprise landing the aircraft according to the notification signal(s) sent to the output system(s).

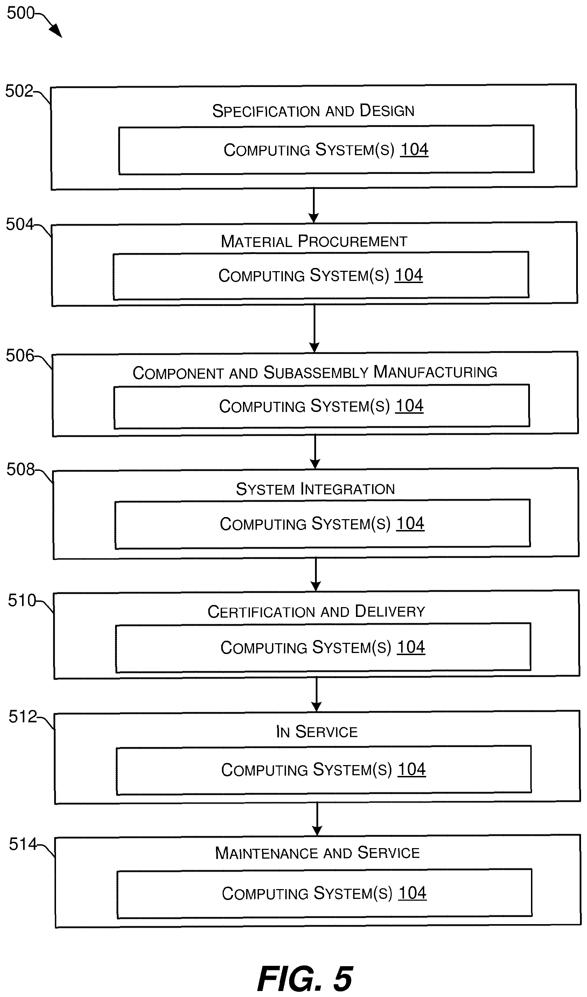

Referring to FIG. 5, a flowchart illustrative of an example of a life cycle of an aircraft (e.g., the aircraft 100 of FIG. 1) that includes computing system(s) 104 is shown and designated as method 500. The computing system(s) 104 include a flight management system 130, which includes an approach monitor system 102 and flight phase mode logic 134, that is executable by processor(s) 126 to reduce or alleviate risks associated with unstable approaches to landing. During pre-production, the method 500 includes, at block 502, specification and design of the aircraft. During specification and design of the aircraft, the method 500 can include specification and design of the computing system(s) 104. The computing system(s) 104 may include the components shown in FIG. 1 and one or more additional components. At block 504, the method 500 includes material procurement, which can include obtaining the components of the computing system(s) 104 or assembled computing system(s) 104.

During production, the method 500 includes, at block 506, component and subassembly manufacturing and, at block 508, system integration of the aircraft. For example, the method 500 can include subassembly manufacturing of components of the computing system(s) 104 and system integration of assembled computing system(s) 104 in the aircraft. At block 510, the method 500 includes certification and delivery of the aircraft and, at block 512, placing the aircraft in service. Certification and delivery can include certification of the computing system(s) 104 to place the computing system(s) 104 and the aircraft in service. While in service by a customer, the aircraft can be scheduled for routine maintenance and service (which can also include updates, modification, reconfiguration, refurbishment, and so on). At block 514, the method 500 includes performing maintenance and service on the aircraft, which can include performing maintenance and service on the computing system(s) 104.

Each of the blocks 502-514 of the method 500 can be performed or carried out by a system integrator, a third party, and/or an aircraft operator (e.g., a customer). For the purposes of this description, a system integrator can include without limitation any number of aircraft manufacturers and major-system subcontractors; a third party can include without limitation any number of venders, subcontractors, and suppliers; and an operator can be an airline, leasing company, military entity, service organization, and so on.

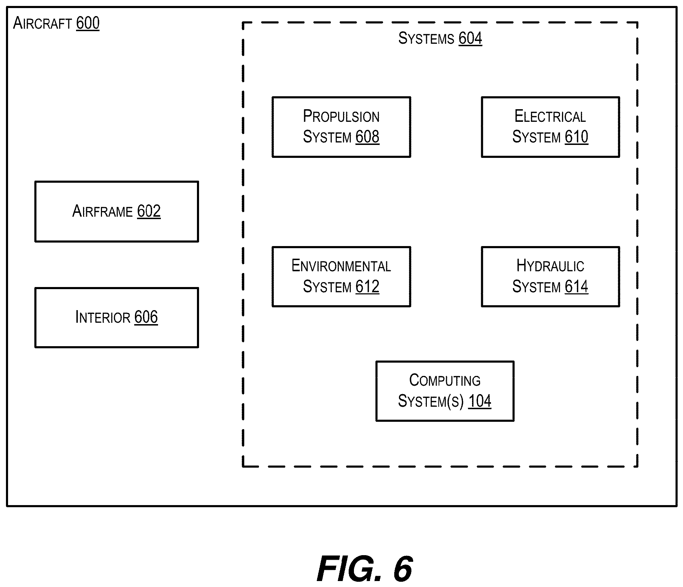

Aspects of the disclosure can be described in the context of an example of a vehicle. A particular example of a vehicle associated with the life cycle described with reference to FIG. 5 is an aircraft 600 as shown in FIG. 6. In the example of FIG. 6, the aircraft 600 includes an airframe 602 with a plurality of systems 604 and an interior 606. Examples of the plurality of systems 604 include one or more of a propulsion system 608, an electrical system 610, an environmental system 612, a hydraulic system 614, and the computing system(s) 104. Any number of additional systems can be included, one or more of the systems 604 and the additional systems can be electrically and/or physically coupled together, one or more of the systems can be omitted (e.g., the hydraulic system 614), or combinations thereof. In the example of FIG. 6, the computing system(s) 104 is the computing system of FIG. 1 that includes the flight management system 130 with the approach monitor system 102 and the flight phase mode logic 134. The computing system(s) 104 are configured to support handling of the aircraft 600 during the approach to landing phase of flight of the aircraft 600.

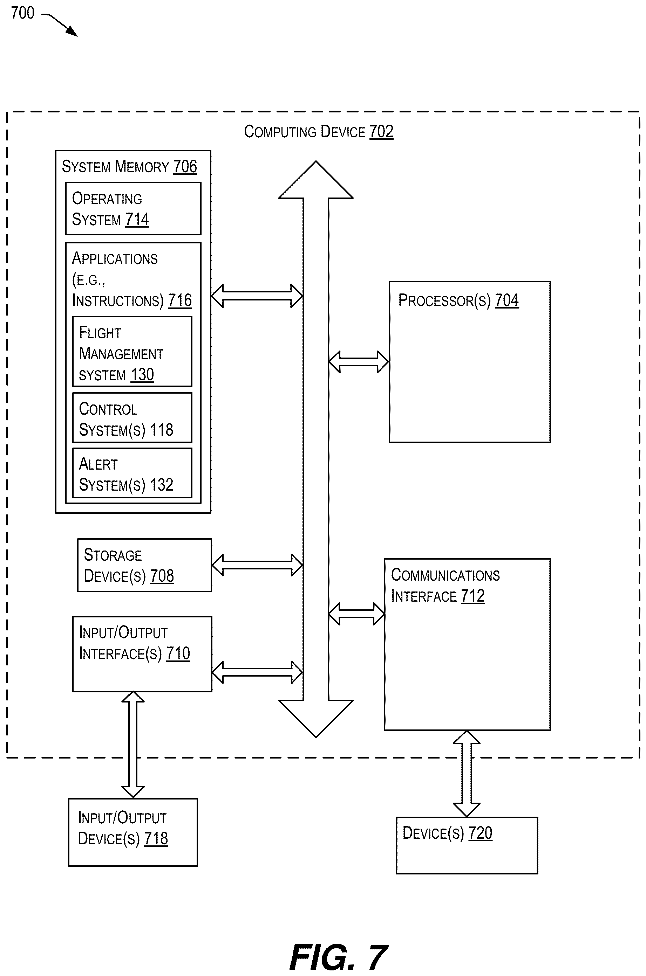

FIG. 7 is an illustration of a block diagram of a computing environment 700 including a general purpose computing device 702 configured to support implementations of computer-implemented methods and computer-executable program instructions (or code) according to the present disclosure. For example, the computing device 702, or portions thereof, may execute instructions to perform, or cause equipment to perform, operations described with reference to FIGS. 1-4. In an implementation, the computing device 702 is, or is a component of, the computing system 104 of the aircraft 100, the communication system 106, the sensor system 108, the user input systems 110, the output systems 112, or combinations thereof.

The computing device 702 includes a processor 704. In an implementation, the processor 704 includes the one or more processors 126 of FIG. 1. The processor 704 communicates with a system memory 706, one or more storage devices 708, one or more input/output interfaces 710, one or more communications interfaces 712, or a combination thereof. The system memory 706 includes non-transitory computer readable media, including volatile memory devices (e.g., random access memory (RAM) devices), nonvolatile memory devices (e.g., read-only memory (ROM) devices, programmable read-only memory, and flash memory), or both. The system memory 706 includes an operating system 714, which may include a basic input/output system for booting the computing device 702 as well as a full operating system to enable the computing device 702 to interact with users, other programs, and other devices. The system memory 706 includes one or more applications 716 (e.g., instructions) which are executable by the processor 704. In an implementation, the system memory 706 and the one or more storage devices 708 include the memory devices of FIG. 1, and the one or more applications 716 include the flight management system 130, the approach monitor system 102, the flight phase mode logic 134, the control systems 118, and the alert system 132 of FIG. 1.

The processor 704 communicates with the one or more storage devices 708. For example, the one or more storage devices 708 are non-transitory computer readable media that can include nonvolatile storage devices, such as magnetic disks, optical disks, or flash memory devices. The storage devices 708 can include both removable and non-removable memory devices. The storage devices 708 can be configured to store an operating system, images of operating systems, applications, and program data. In particular implementations, the system memory 706, the storage devices 708, or both, include tangible computer-readable media incorporated in hardware and which are not signals.

The processor 704 communicates with the one or more input/output interfaces 710 that enable the computing device 702 to communicate with one or more input/output devices 718 to facilitate user interaction. The input/output interfaces 710 can include serial interfaces (e.g., universal serial bus (USB) interfaces or Institute of Electrical and Electronics Engineers (IEEE) 1364 interfaces), parallel interfaces, display adapters, audio adapters, and other interfaces. The input/output devices 718 can include control sticks, keyboards, pointing devices, displays, speakers, microphones, touch screens, and other devices. The processor 704 detects interaction events based on user input received via the input/output interfaces 710. Additionally, the processor 704 sends a display to a display device via the input/output interfaces 710. In some implementations, the input/output devices 718 include the user input systems 110 and the output systems 112 of FIG. 1.

The processor 704 can communicate with one or more devices 720 via the one or more communications interfaces 712. The one or more devices 720 can include computing devices external to the aircraft 100 and controllers, sensors, and other devices of the aircraft 100. The one or more communications interfaces 712 may include wired Ethernet interfaces, IEEE 802 wireless interfaces, other wireless communication interfaces, one or more converters to convert analog signals to digital signals, electrical signals to optical signals, one or more converters to convert received optical signals to electrical signals, or other network interfaces.

Aspects of the disclosure are described further with reference to the following set of interrelated Examples:
According to Example 1, an aircraft includes a plurality of sensors; and one or more computing systems configured to receive aircraft data from the plurality of sensors and flight plan data, wherein the one or more computing systems are further configured to execute instructions to: determine a target path for an approach to landing phase based on the flight plan data; during an initial approach for the approach to landing phase, determine, based on the target path and the aircraft data, a state for each monitored condition of a first set of monitored conditions and a region of the monitored condition that includes the state, wherein each monitored condition includes a target region; during a final approach for the approach to landing phase, determine, based on the target path and the aircraft data, a state for each monitored condition of a second set of monitored conditions and a region of the monitored condition that includes the state, wherein the second set of monitored conditions includes one or more of the first set of monitored conditions and one or more additional monitored conditions, and wherein each of the one or more additional monitored conditions includes a target region; access notification content for a region of a particular monitored condition, wherein the state for the particular monitored condition is outside of the target region for the particular monitored condition; and send one or more notification signals based on the notification content to one or more output systems.

Example 2 includes the aircraft of Example 1, wherein the one or more computing systems are further configured to execute instructions to: determine that states of monitored conditions of a plurality of the monitored conditions of the first set of monitored conditions are outside of a corresponding target region; and apply prioritization rules to the plurality of monitored conditions to determine a priority order of the plurality of monitored conditions, wherein the particular monitored condition has a highest priority.

Example 3 includes the aircraft of Example 2, wherein the one or more computing systems are further configured to execute instructions to, after the one or more notification signals are sent: determine that a second monitored condition has the highest priority based on the state of the second monitored condition; responsive to a determination that the one or more notification signals are not associated with the second monitored condition, access second notification content for a particular region of the second monitored condition that includes the state of the second monitored condition; and send one or more notification signals based on the second notification content to the one or more output systems.

Example 4 includes the aircraft of any of Examples 1 to 3, wherein regions of the particular monitored condition include the target region, a first end region, and one or more intermediate regions between the target region and the first end region, and wherein the one or more computing systems are further configured to execute instructions to: determine an updated state for the particular monitored condition based on current aircraft data; and in response to a first determination that the region of the particular monitored condition that includes the updated state changed to an intermediate region of the one or more intermediate regions that is closer to the target region and the particular monitored condition has a highest priority of monitored conditions outside of corresponding target regions, continue to determine updated states based on current aircraft data without accessing notification content for the particular monitored condition.

Example 5 includes the aircraft of any of Examples 1 to 4, wherein the one or more computing systems are further configured to execute instructions to: determine updated states for the monitored conditions based on current aircraft data; and in response to a determination that the region of the particular monitored condition that includes the updated state changed to the target region and no states for monitored conditions are outside of the corresponding target regions, end provision of one or more notification signals to the one or more output systems to indicate a stable approach.

According to Example 6, a method includes determining, at a computing system of an aircraft, a target path for an approach to landing phase based on flight plan data; during an initial approach for the approach to landing phase, determining, at the computing system based on the target path and aircraft data, a state for each monitored condition of a first set of monitored conditions and a region of the monitored condition that includes the state, wherein regions for each monitored condition include a target region; during a final approach for the approach to landing phase, determining, at the computing system based on the target path and the aircraft data, a state for each monitored condition of a second set of monitored conditions and a region of the monitored condition that includes the state, wherein the second set of monitored conditions includes one or more of the first set of monitored conditions and one or more additional monitored conditions, and wherein each of the one or more additional monitored conditions includes a target region; accessing, at the computing system, notification content for a region of a particular monitored condition, wherein the state for the particular monitored condition is outside of the target region for the particular monitored condition; and sending one or more notification signals based on the notification content from the computing system to one or more output systems.

Example 7 includes the method of Example 6 and further includes determining that states of monitored conditions of a plurality of the monitored conditions of the second set of monitored conditions are outside of a corresponding target region; and applying prioritization rules to the plurality of monitored conditions to determine a priority order of the plurality of monitored conditions, wherein the particular monitored condition has a highest priority.

Example 8 includes the method of Example 6 or Example 7, and further includes one or more of: determining that states of monitored conditions of a plurality of the monitored conditions of the first set of monitored conditions are outside of their respective target regions; and applying prioritization rules to the plurality of monitored conditions of the first set of monitored conditions to determine a priority order of the plurality of monitored conditions of the first set of monitored conditions, wherein the particular monitored condition has a highest priority; and determining that states of monitored conditions of a plurality of the monitored conditions of the second set of monitored conditions are outside of their respective target region; and applying prioritization rules to the plurality of monitored conditions of the second set of monitored conditions to determine a priority order of the plurality of monitored conditions, wherein the particular monitored condition of the second set of monitored conditions has a highest priority. For instance, the determination that states of monitored conditions are outside of their respective target region and the application of prioritization rules to the plurality of monitored conditions can be implemented on the monitored conditions of the first set, on the monitored conditions of the second set, or on the monitored conditions of both first and second sets.

Example 9 includes the method of Example 7 or of Example 8, wherein the prioritization rules provide a higher priority to a first monitored condition with the state in an end region of the first monitored condition than to a second monitored condition with the state in an intermediate region between the target region of the second monitored condition and an end region of the second monitored condition.

Example 10 includes the method of any of Examples 6 to 9, and further includes, after sending the one or more notification signals: determining that a second monitored condition has the highest priority based on the state of the second monitored condition; responsive to a determination that the one or more notification signals are not associated with the second monitored condition, accessing second notification content for a particular region of the second monitored condition that includes the state of the second monitored condition; and sending one or more notification signals based on the second notification content to the one or more output systems.

Example 11 includes the method of any of Examples 6 to 10, wherein the regions of the particular monitored condition include the target region, a first end region, and one or more intermediate regions between the target region and the first end region, and further includes determining updated state for the particular monitored condition based on current aircraft data; and in response to a first determination that the region of the particular monitored condition that includes the updated state changed to an intermediate region of the one or more intermediate regions that is closer to the target region and the particular monitored condition has a highest priority of monitored conditions outside of corresponding target regions, continuing to determine updated states based on current aircraft data without accessing notification content for the particular monitored condition.

Example 12 includes the method of Example 11, wherein a width of the target region varies with altitude during at least a portion of the final approach.

Example 13 includes the method of any of Examples 6 to 12 and further includes determining updated states of the monitored conditions based on current aircraft data; and in response to a determination that the region of the particular monitored condition that includes the updated state changed to the target region and no states for monitored conditions are outside of the corresponding target regions, ending provision of one or more notification signals to the one or more output systems to indicate a stable approach.

Example 14 includes the method of any of Examples 6 to 13, wherein the regions of a first monitored condition include the target region, a first end region, and one or more intermediate regions between the target region and the first end region, and wherein said determining the state for the first monitored condition of the second set of monitored conditions includes: determining a rate of change of the state of the first monitored condition away from the target region; and in response to the rate of change indicating the state of the first monitored condition will be included in a particular region before passage of a threshold amount of time when one or more regions are between a first region including a current state of the monitored condition and the particular region, pausing determination of the state of the first monitored condition until passage of the threshold amount of time.

Example 15 includes the method of any of Examples 6 to 14, wherein the computing system comprises both flight phase mode logic to determine a current flight phase and an approach monitor system to provide notification when an approach is not a stable approach, to automatically initiate a go-around based on one or more conditions at an altitude below a critical altitude, or both.

Example 16 includes the method of Example 15 and further includes changing the approach monitor system to a standby mode in response to initiation of a go-around, and in response to the current flight phase being a particular phase other than the approach to landing phase.

Example 17 includes the method of Example 15 or Example 16 and further includes activating the approach monitor system in response to the flight phase mode logic determining that the flight phase is the initial approach of the approach to landing phase.

Example 18 includes the method of any of previous examples and further comprises landing the aircraft according to the notification signal(s) sent to the output system(s).

According to Example 19, a non-transitory computer-readable medium includes instructions, wherein the instructions are executable by one or more processors during an approach to landing phase of an aircraft to cause the one or more processors to: determine a target path for an approach to landing phase based on flight plan data; during an initial approach for the approach to landing phase, determine, based on the target path and aircraft data, a state for each monitored condition of a first set of monitored conditions and a region of the monitored condition that includes the state, wherein regions for each monitored condition include a target region; during a final approach for the approach to landing phase, determine, based on the target path and the aircraft data, a state for each monitored condition of a second set of monitored conditions and a region of the monitored condition that includes the state, wherein the second set of monitored conditions includes one or more of the first set of monitored conditions and one or more additional monitored conditions, and wherein each of the one or more additional monitored conditions includes a target region; access notification content for a region of a particular monitored condition, wherein the state for the particular monitored condition is outside of the target region for the particular monitored condition; and send one or more notification signals based on the notification content to one or more output systems.

Example 20 includes the non-transitory computer-readable medium of Example 19, wherein the instructions are further executable by the one or more processors to: determine that states of monitored conditions of a plurality of the monitored conditions are outside of a corresponding target region; and apply prioritization rules to the plurality of monitored conditions to determine a priority order of the plurality of monitored conditions, wherein the particular monitored condition has a highest priority.

Example 21 includes the non-transitory computer-readable medium of Example 19 or Example 20, wherein the regions of the particular monitored condition include the target region, a first end region, and one or more intermediate regions between the target region and the first end region, and wherein the instructions are further executable by the one or more processors to: determine an updated state for the particular monitored condition based on current aircraft data; and in response to a first determination that the region of the particular monitored condition that includes the updated state changed to an intermediate region of the one or more intermediate regions that is closer to the target region and the particular monitored condition has a highest priority of monitored conditions outside of corresponding target regions, continue to determine updated states based on current aircraft data without accessing notification content for the particular monitored condition.

Example 22 includes the non-transitory computer-readable medium of any of Examples 19 to 21, wherein the instructions are further executable by the one or more processors to: determine updated states for the monitored conditions based on current aircraft data; and in response to a determination that the region of the particular monitored condition that includes the updated state changed to the target region and no states for monitored conditions are outside of the corresponding target regions, end provision of one or more notification signals to the one or more output systems to indicate a stable approach.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

## Claims

1. A method (400) comprising:
determining (402), at a computing system (104) of an aircraft (100), a target path (202) for an approach to landing phase (200) based on flight plan data (146);
during an initial approach (208) for the approach to landing phase, determining (404), at the computing system based on the target path and aircraft data (142), a state (138) for each monitored condition (140) of a first set (156) of monitored conditions and a region (302-308) of the monitored condition that includes said state, wherein regions for each monitored condition include a respective target region (302);
during a final approach (214) for the approach to landing phase, determining (406), at the computing system based on the target path and the aircraft data, the state for each monitored condition of a second set (158) of monitored conditions and the region of the monitored condition that includes said state, wherein the second set of monitored conditions includes one or more monitored conditions of the first set and one or more additional monitored conditions, and wherein each of the one or more additional monitored conditions includes its respective target region;
accessing (408), at the computing system, notification content (154) for the respective region of a particular monitored condition of said first or second set, wherein the state for the particular monitored condition is outside of the respective target region for the particular monitored condition; and
sending (410) one or more notification signals (136) based on the notification content from the computing system to one or more output systems.

2. The method of claim 1, further comprising one or more of:
determining that states of monitored conditions of a plurality of the monitored conditions of the first set of monitored conditions are outside of their respective target regions; and
applying prioritization rules to the plurality of monitored conditions of the first set of monitored conditions to determine a priority order of the plurality of monitored conditions of the first set of monitored conditions, wherein the particular monitored condition has a highest priority; and
determining that states of monitored conditions of a plurality of the monitored conditions of the second set of monitored conditions are outside of their respective target regions; and
applying prioritization rules to the plurality of monitored conditions of the second set of monitored conditions to determine a priority order of the plurality of monitored conditions, wherein the particular monitored condition of the second set of monitored conditions has a highest priority.

3. The method of claim 2, wherein the prioritization rules provide a higher priority to a first monitored condition with the state in an end region of the first monitored condition than to a second monitored condition with the state in an intermediate region between the target region of the second monitored condition and an end region of the second monitored condition.

4. The method of any of claims 2 and 3, further comprising, after sending the one or more notification signals:
determining that a second monitored condition has the highest priority based on the state of the second monitored condition;
responsive to a determination that the one or more notification signals are not associated with the second monitored condition, accessing second notification content for a particular region of the second monitored condition that includes the state of the second monitored condition; and
sending one or more notification signals based on the second notification content to the one or more output systems.

5. The method of any of the preceding claims, wherein the respective regions of the particular monitored condition include the target region, a first end region (306), and one or more intermediate regions (304, 308) between the target region and the first end region, the method further comprising:
determining an updated state for the particular monitored condition based on current aircraft data, flight plan data or both; and
in response to a first determination that the region of the particular monitored condition that includes the updated state changed to an intermediate region of the one or more intermediate regions that is closer to the target region and the particular monitored condition has a highest priority of monitored conditions outside of corresponding target regions, continuing to determine updated states based on current aircraft data without accessing notification content for the particular monitored condition.

6. The method of claim 5, wherein a width of the target region varies with altitude during at least a portion of the final approach.

7. The method of any of the preceding claims, further comprising:
determining updated states of the monitored conditions based on current aircraft data, flight plan data or both; and
in response to a determination that the region of the particular monitored condition that includes the updated state changed to the target region and no states for monitored conditions are outside of the corresponding target regions, ending provision of one or more notification signals to the one or more output systems to indicate a stable approach.

8. The method of any of the preceding claims, wherein the regions of a first monitored condition include the target region, a first end region, and one or more intermediate regions between the target region and the first end region, and wherein said determining the state for the first monitored condition of the second set of monitored conditions comprises:
determining a rate of change of the state of the first monitored condition away from the target region; and
in response to the rate of change indicating the state of the first monitored condition will be included in a particular region before passage of a threshold amount of time when one or more regions are between a first region including a current state of the monitored condition and the particular region, pausing determination of the state of the first monitored condition until passage of the threshold amount of time.

9. The method of any of the preceding claims, wherein the computing system comprises both flight phase mode logic (134) to determine a current flight phase and an approach monitor system (102) to provide notification when an approach is not a stable approach, to automatically initiate a go-around based on one or more conditions at an altitude below a critical altitude (230), or both.

10. The method of claim 9, further comprising changing the approach monitor system to a standby mode in response to initiation of a go-around, and in response to the current flight phase being a particular phase other than the approach to landing phase.

11. The method of claim 9 or 10, further comprising activating the approach monitor system in response to the flight phase mode logic determining that the current flight phase is the initial approach of the approach to landing phase.

12. The method of any of the preceding claims, further comprising landing the aircraft according to the one or more notification signals sent to the one or more output systems.

13. The method of any of the preceding claims, where the one or more notification signals sent by the one or more output system include at least one tiered notification to indicate an amount of deviation from the target regions of the monitored conditions, a cause for providing the notification signals, and/or a course of action for an operator of the aircraft to take.

14. An aircraft (100) comprising a plurality of sensors (116) and one or more computing means (104) for implementing the method according to any of the preceding claims.

15. A non-transitory computer-readable medium comprising instructions for implementing the method according to any one of claims 1 to 13, wherein the instructions are executable by one or more processors during an approach to landing phase of an aircraft.
